# DEMANDE DE BREVET EUROPEEN

(11) **EP 2 073 507 A1**
(43) Date de publication de la demande: **24.06.2009**
(21) Numéro de dépôt: 08167604.1
(22) Date de dépôt: 27.10.2008
(51) Int. Cl.: H04L 29/12, H04L 29/06

(54) **Contrôle de l'interface d'émission d'un message de réponse SIP**

(30) Priorité: 18.12.2007 FR 0759927
(71) Demandeur: Alcatel Lucent, 75008 Paris (FR)
(72) Inventeur: Froment, Thomas, 91620, NOZAY (FR); LEBEL, Christophe, 44708, ORVAULT (FR)
(74) Mandataire: Chaffraix, Sylvain

(57) **Abrégé**

Client de communication (C), comportant au moins une interface d'émission pour émettre un message de signalisation (M) conforme au protocole SIP, vers une première interface d'un serveur de communication (S). Le client et le serveur sont connectés par un réseau de communication (N₁).

Le client de communication selon l'invention est novateur en ce qu'il est adapté pour insérer dans le message de signalisation une indication sur l'interface à utiliser par le serveur de communication pour émettre son message de signalisation de réponse (R).

## Description

La présente invention est relative à la signalisation permettant l'établissement de sessions multimedia sur un réseau de communication de données. Elle concerne plus particulièrement le protocole SIP (Session *Invitation* Protocol) défini par le RFC 3261 de l'IETF (Internet Engineering Task Force).

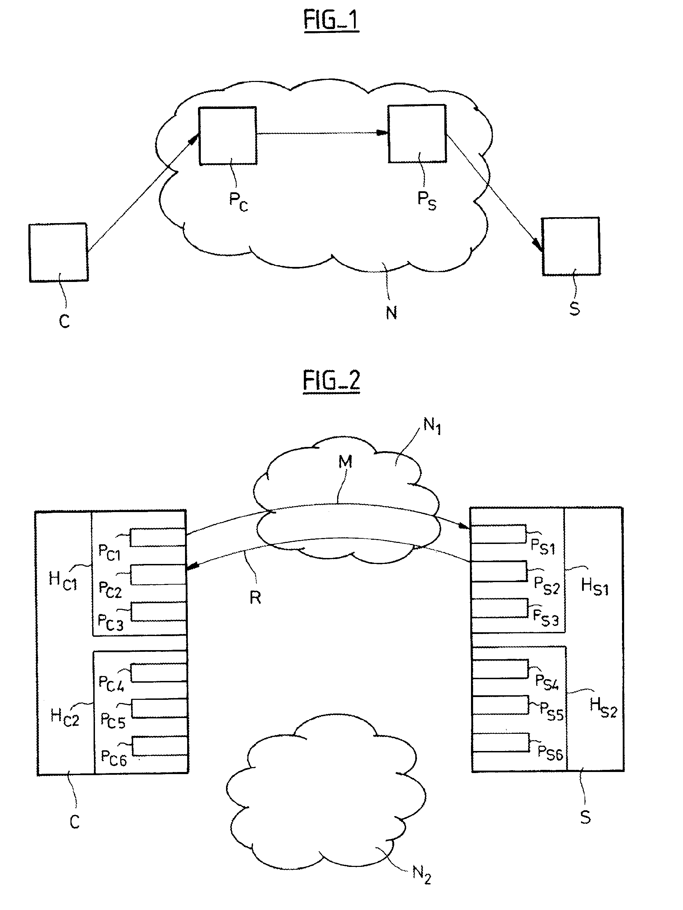

La figure 1 schématise une architecture simplifiée mettant en oeuvre le protocole SIP. Deux éléments de communication, C et S, par exemple des terminaux, sont connectés entre eux par un réseau de communication N. Ils peuvent être connectés par des éléments de communication intermédiaires, dits « proxies », P_{C} et P_{S}.

On suppose que l'élément C souhaite établir une session de communication avec l'élément de communication S. Il transmet pour cela un message de signalisation m à un proxy P_{C} auquel il est rattaché. Ce premier message est typiquement un message SIP « Invite ».

Il peut alors être transmis par une chaine d'éléments intermédiaires non représentés avant de parvenir à l'élément intermédiaire P_{S} auquel l'élément de communication S est connecté. Le message de signalisation m est alors délivré à cet élément destinataire S.

Le premier élément de communication C est appelé « client » et le second « serveur », mais il s'agit de termes fonctionnels, de rôles que peuvent prendre les éléments de communication en fonction de circonstances. Le client est celui qui émet un message de signalisation vers un serveur et en attend une réponse.

Les clients et serveurs de communication peuvent être des terminaux de communication, ainsi que dans l'exemple de la figure 1, mais il peut aussi s'agir de serveurs applicatifs ou de serveurs de signalisation comme par exemple des serveurs implémentant les fonctions CSCF (« *Call Session Control Function* ») au sein d'une architecture IMS (« *IP Multimedia Subsystem* »).

Un message de signalisation SIP comporte plusieurs entêtes permettant d'assurer son acheminement au sein du réseau de communication, ainsi que des informations permettant aux parties d'établir la session multimédia.

Parmi ces entêtes figurent des entêtes qui permettent d'indiquer les interfaces destinataires et d'émission du message de signalisation.

On appelle interface un couple formé par une adresse IP (IPv4 ou IPv6) et un numéro de port. Un même élément de communication peut posséder plusieurs interfaces. Il peut posséder plusieurs adresses IP s'il appartient à plusieurs réseaux de communication.

La figure 2 schématise cette situation.

Les deux éléments de communication C et S sont connectés par deux réseaux de communication N₁ et N₂. Le client C possède donc deux adresses IP, H_{C1} et H_{C2} utilisée respectivement pour les réseaux N₁ et N₂. De même, le serveur possède deux adresses IP, H_{S1} et H_{S2} utilisés respectivement pour les réseaux N₁ et N₂.

Chacun de ces éléments possède plusieurs ports : le client C comporte les ports P_{C1}, P_{C2}, P_{C3}, P_{C4}, P_{C5}, P_{C6}, et le serveur S comporte les ports P_{S1}, P_{S2}, P_{S3}, P_{S4}, P_{S5}, P_{S6}.

Lorsque le client C émet un message de signalisation M, il indique dans l'entête approprié un identifiant du serveur S. Cet identifiant peut être une adresse logique qui va être traduite par un élément intermédiaire, ou bien directement une adresse ou une interface physique (i.e. le port peut être précisé ou non). Il indique également l'interface à partir de laquelle il émet le message, ainsi que l'interface sur laquelle il souhaite recevoir une réponse. Ces deux interfaces peuvent être identiques ou différentes.

Dans l'exemple de la figure 2, le message de signalisation M est transmis depuis l'interface H_{C1}/P_{C2} vers l'interface H_{S1}/P_{S2} et précise que la réponse est souhaitée sur l'interface H_{C1}/P_{C3}. Le serveur S répond par un message de signalisation de réponse R, émis à partir de l'interface H_{S1}/P_{S3} et destiné à l'interface souhaitée H_{C1}/P_{C3}.

Il n'est toutefois pas possible pour le client C de préciser à partir de quelle interface il souhaite que le serveur lui transmette le message de réponse R. La façon dont celui-ci détermine l'interface de sortie utilisée est fonction de l'implémentation.

Or, il peut s'avérer nécessaire dans certaines situations d'utiliser une interface plutôt qu'une autre. C'est par exemple le cas si un équipement de traduction d'adresses NAT (pour « *Network Address Translation* ») est intercalé entre le client C et le serveur S, ou bien si un protocole de communication sécurisé comme IPsec est utilisé pour transporter les messages de signalisation.

Un besoin se fait donc sentir pour offrir au client de communication un mécanisme pour contrôler la détermination de l'interface utilisée par le serveur pour répondre à un message de signalisation.

Le but de l'invention est de palier ce manque.

Elle a pour premier objet, un client de communication comportant au moins une interface d'émission pour émettre un message de signalisation, conforme au protocole SIP, vers une première interface d'un serveur de communication. Le client et le serveur sont connectés par un réseau de communication. Selon l'invention, le client est caractérisé en ce qu'il est adapté pour insérer dans le message de signalisation une indication sur l'interface à utiliser par le serveur de communication pour émettre son message de signalisation de réponse.

Selon une mise en oeuvre de l'invention, l'indication contient une adresse à utiliser par le serveur de communication pour émettre son message de signalisation de réponse.

Cette indication peut également contenir un mot réservé spécifiant un comportement à respecter par le serveur de communication pour choisir l'adresse à utiliser pour émettre son message de signalisation de réponse.

Ce mot réservé peut être choisi dans un groupe comprenant au moins :
- un mot réservé spécifiant que l'adresse à utiliser est la même que celle de la première interface ;
- un mot réservé spécifiant que l'adresse à utiliser doit être déterminé de façon aléatoire ;
- un mot réservé indiquant un critère sémantique de détermination de l'adresse à utiliser.

L'indication peut en outre contenir un numéro de port à utiliser par le serveur de communication pour émettre son message de signalisation de réponse.

Cette indication peut également contenir un mot réservé spécifiant un comportement à respecter par le serveur de communication pour choisir le numéro de port à utiliser pour émettre son message de signalisation de réponse.

Ce mot réservé peut être choisi dans un groupe comprenant au moins :
- un mot réservé spécifiant que le numéro de port à utiliser est le même que celui de la première interface ;
- un mot réservé spécifiant que le numéro de port à utiliser doit être déterminé de façon aléatoire ;
- un mot réservé indiquant un critère sémantique de détermination de du numéro de port à utiliser.

De façon similaire, un problème se pose de permettre au client de communication de contrôler la détermination du protocole de transport utilisée par le serveur pour répondre à un message de signalisation

Le client de communication peut être adapté pour insérer une seconde indication sur le protocole à utiliser par le serveur pour émettre son message de signalisation de réponse.

Cette seconde indication peut être transmise en addition de l'indication relative à l'interface, ou bien seule.

L'indication et/ou la seconde indication peuvent par exemple être insérées au sein d'un entête « Via ».

L'invention a également pour objet un serveur de communication comportant au moins une interface pour recevoir un message de signalisation entrant d'un réseau de communication, et une seconde interface pour émettre un message de signalisation de réponse.

Le serveur se caractérise en ce qu'il est en outre adapté pour déterminer la seconde interface en fonction d'une indication contenue dans le message de signalisation entrant.

L'indication peut contenir une adresse correspondant à la seconde interface ou un mot réservé spécifiant un comportement à respecter pour choisir l'adresse correspondant à la seconde interface.

Dans ce dernier cas, le mot réservé peut être choisi dans un groupe comprenant au moins :
- un mot réservé spécifiant que l'adresse est la même que celle de la première interface ;
- un mot réservé spécifiant que l'adresse doit être déterminée de façon aléatoire ;
- un mot réservé indiquant un critère sémantique de détermination de l'adresse.

L'indication peut contenir également un numéro de port correspondant à cette seconde interface.

Elle peut contenir un mot réservé spécifiant un comportement à respecter pour choisir le numéro de port correspondant à la seconde interface.

Ce mot réservé peut être choisi dans un groupe comprenant au moins :
- un mot réservé spécifiant que le numéro de port est le même que celui de la première interface ;
- un mot réservé spécifiant que le numéro de port doit être déterminé de façon aléatoire ;
- un mot réservé indiquant un critère sémantique de détermination de du numéro de port.

Le serveur peut en outre être adapté pour déterminer le protocole à utiliser pour émettre le message de signalisation de réponse, en fonction d'une seconde indication contenue dans le message de signalisation entrant.

L'indication et/ou la seconde indication peuvent être insérées au sein d'un entête « Via ».

L'invention a également pour objet un procédé pour la communication de messages de signalisation entre un client et un serveur connectés par un réseau de communication, comportant une première étape de transmission d'un message de signalisation par le client destiné au serveur, et une seconde étape de transmission par ce serveur d'un message de réponse destiné à ce client, à partir d'une interface.

Le procédé se caractérise en ce que le client insère une indication au sein du message de signalisation préalablement à la première étape, et en ce que le serveur détermine l'interface en fonction de cette indication, préalablement à ladite seconde étape.

L'invention a également pour objet un terminal de communication adapté pour mettre en oeuvre un client de communication ou un serveur de communication, tels que décrits précédemment.

Un autre objet de l'invention est un réseau de communication comportant au moins un tel terminal.

Le serveur de communication et/ou le client de communication peuvent être un élément mettant en oeuvre une fonction CSCF conformément aux spécifications d'une architecture IMS.

L'invention a aussi pour objet un équipement de communication, adapté pour à la réception d'un message de signalisation entrant transporté par le protocole TCP et destiné à un second équipement de communication situé derrière un équipement de traduction d'adresses, transmettre à ce second équipement un message de signalisation utilisant le protocole UDP et contenant une indication spécifiant que le second équipement doit transmettre une réponse à l'équipement de communication en utilisant le protocole TCP, et transmettre ce message de signalisation entrant après la réception du message de réponse.

Il est à noter que cette addition d'une indication demeure tout à fait compatible avec le protocole SIP tel que défini par le RFC 3261. Elle est aussi compatible avec les extensions du protocole SIP définis par le RFC 3581 intitulé « *An extension to the Session Initiation Protocol (SIP) for Symmetric Response Routing* ». Ce RFC défini des paramètres supplémentaires, « received » et « rport » relatifs à l'interface de réception du message de signalisation par le serveur. Il s'agit donc de paramètres distincts de l'indication sur l'interface à utiliser par le serveur. Cette indication et les paramètres du RFC 3581 peuvent cohabiter au sein d'un message de signalisation ou être utilisés séparément.

L'invention et ses avantages apparaîtront de façon plus claire dans la description qui va suivre en liaison avec les figures annexées.

La figure 1, précédemment commentée, schématise une architecture simplifiée mettant en communication un client et un serveur de communication.

La figure 2, également déjà commentée, illustre une communication entre un client et un serveur, chacun disposant de plusieurs interfaces de communication.

Les figures 3 à 5 schématisent trois cas d'application du mécanisme de l'invention.

La figure 6 illustre l'utilisation du procédé de l'invention pour la problématique de la traversée d'un équipement de traduction d'adresses.

Un message de signalisation conforme au protocole SIP comporte plusieurs entêtes.

Les entêtes « From », « To », « Contact » sont relatives aux éléments émetteurs et destinataires du message de signalisation. Dans l'exemple représenté dans la figure 1, on peut supposer que l'élément émetteur est le client C et l'élément destinataire est l'élément S.

Chaque élément intermédiaire, comme les proxies P_{C} et P_{S}, ajoute un entête « Via » au message de signalisation retransmis.

Cet entête « Via » permet ainsi de marquer le chemin suivi par un message de signalisation au sein d'un réseau. Un message de réponse peut alors suivre le même chemin, en sens inverse, en utilisant les entêtes « Via ». Chaque élément intermédiaire ainsi retraversé retire l'entête «Via » le concernant.

Dans la figure 2, le client de communication C est l'émetteur du message de signalisation M. Il peut par exemple s'agir d'un terminal de communication ou plus généralement d'un UAC (« *User Agent Client* »), ou bien d'un serveur applicatif, etc.

Il peut également s'agir d'un élément intermédiaire de type « SIP proxy ».

De même, le serveur de communication S peut être le destinataire du message de signalisation et ce peut être un terminal, un serveur applicatif, un serveur de signalisation, etc.

Il peut également jouer le rôle d'un élément intermédiaire de type « SIP proxy ».

Dans le cas d'une architecture de type IMS (« *IP Multimedia Subsystem* »), ces éléments de communication peuvent être des éléments de signalisation mettant en oeuvre une fonction CSCF (« *Call Session Control Function* »).

Il est rappelé que les termes « client » et « serveur » s'entendent dans le cadre du contexte de l'émission d'un message de signalisation. Le même élément de communication peut prendre des rôles de client et de serveur. Par exemple un terminal peut être client lorsqu'il émet un message d'invitation pour initier une session de communication avec un autre parti, puis devenir serveur lorsqu'il recevra un message d'invitation provenant d'un autre terminal.

Ces définitions sont conformes au paragraphe 6 du RFC 3261 de l'IETF.

Le client de communication C comporte au moins une interface d'émission pour émettre un message de signalisation M vers un serveur S, à travers un réseau de communication N₁.

Lorsque le client C émet le message de signalisation M, il insère un entête « VIA ». S'il n'est pas émetteur du message mais agit en tant qu'élément intermédiaire, il ajoute cet entête à la liste des entêtes « Via » déjà présent.

Cet entête indique le protocole de transport utilisé pour la transmission du message et identifie l'interface sur laquelle le client souhaite recevoir une réponse.

Cet entête « Via comprend plusieurs paramètres, certains étant obligatoires et d'autres optionnels.

Selon l'exemple donné par le RFC 3261, un entête « Via » peut être de la forme :
Via: SIP/2.0/UDP erlang.bell-telephone.com:5060;
branch=z9hG4bKa7cba8dlze;

Les paramètres « erlang.bell-telephone.com:5060 » représentent respectivement l'adresse du client C et le port sur lequel il souhaite recevoir la réponse. Les paramètres « SIP/2.0/UDP » déterminent respectivement la version du protocole SIP utilisée et le protocole de transport utilisé pour transmettre le message de signalisation entre le client et le serveur.

Dans l'exemple de la figure 2, un tel entête « Via » pourrait avoir pour valeur :
Via: SIP/2.0/UDP H_{C1}:P_{C3}; branch=z9hG4bKa7c6a8dlze;

Selon l'invention le client est en outre adapté pour insérer une indication sur l'interface à utiliser par le serveur (c'est-à-dire l'élément de réseau recevant le message de signalisation) pour émettre son message de signalisation de réponse.

Cette interface peut être déterminée par un port, lorsque le serveur ne possède qu'une seule adresse IP, ou bien par un couple adresse IP/port, lorsqu'il en possède plusieurs.

L'indication peut par conséquent être constituée d'une ou de deux parties : l'une concernant l'adresse IP (« interface réseau »), et l'autre concernant le port.

L'indication peut donc contenir une adresse, notamment une adresse IP (*Internet Protocol*) ou un identifiant logique, par exemple une URI (« *Universal Resource Identifier* ») conforme au protocole SIP.

Elle peut également contenir un numéro de port.

Les différentes parties de l'indication peuvent être introduites par des mots-clés. A titre d'exemple, les mots-clés « rpathHost » et « rpathPort » peuvent être utilisés, respectivement pour introduire la partie relative à l'adresse et la partie relative au port.

Dans l'exemple de la figure 2, un possible entête « Via » serait : Via: SIP/2.0/UDP H_{C1}:P_{C3}; branch=z9hG4bKa7c6a8dlze; rpathHost=H_{S1}; rpathPort=P_{S3};

Ces deux parties peuvent contenir un mot réservé plutôt qu'un identifiant d'adresse ou un numéro de port. Ce mot réservé spécifie un comportement à respecter par le serveur de communication pour choisir l'interface (i.e. l'adresse et/ou le port) à utiliser pour émettre son message de signalisation de réponse.

Un tel mot réservé peut spécifier que l'adresse ou le port à utiliser est le même que celui sur lequel le serveur a reçu le message.

Il peut spécifier que l'adresse ou le port à utiliser doit être déterminé de façon aléatoire.

Il peut encore indiquer un critère sémantique de détermination de l'adresse ou du port à utiliser.

Lorsque le serveur possède plusieurs adresses, il est bien entendu possible d'utiliser un tel mot réservé que pour la partie relative à l'adresse, ou bien que pour la partie relative au port, ou encore pour les deux. Dans ce dernier cas, les mots réservés peuvent être identiques ou différents pour l'adresse et pour le port.

En outre, le client peut être adapté pour insérer une seconde indication sur le protocole à utiliser par le serveur pour émettre son message de signalisation de réponse.

Cette indication peut être un identifiant de protocole. Cet identifiant peut être celui d'un des protocoles de transport disponibles : TCP, UDP...

Cette indication peut également être un mot réservé plutôt qu'un identifiant de protocole. Ce mot réservé spécifie un comportement à respecter par le serveur de communication pour choisir le protocole à utiliser pour émettre son message de signalisation de réponse.

Un tel mot réservé peut spécifier que le protocole à utiliser est le même que celui utilisé pour le message de signalisation M. Il peut spécifier que le protocole à utiliser doit être déterminé de façon aléatoire. Il peut encore indiquer un critère sémantique de détermination de ce protocole à utiliser.

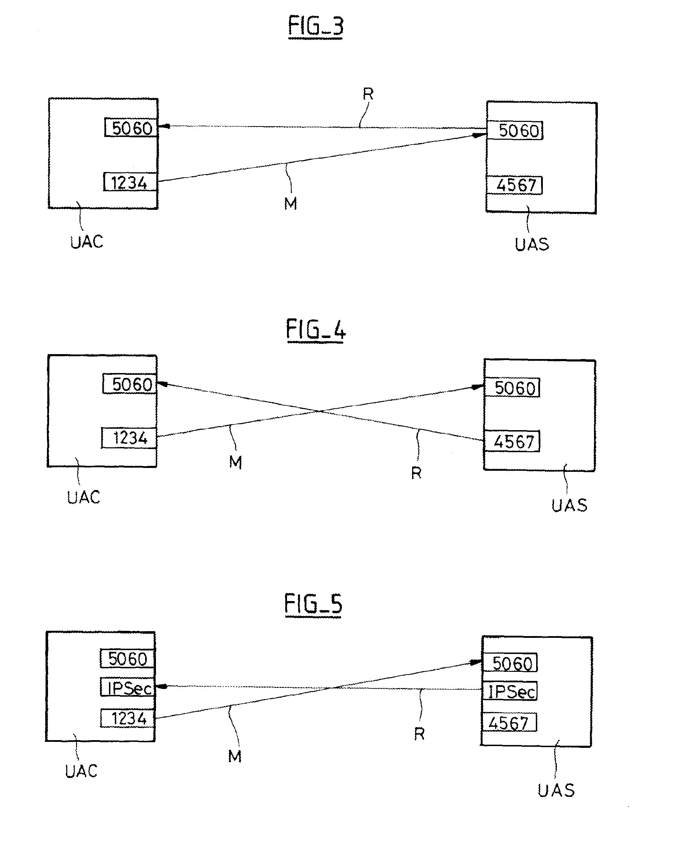

Les figures 3, 4 et 5 schématisent différents comportements du serveur spécifiés par l'indication. Dans ces exemples, le client UAC et le serveur UAS ne possèdent qu'une seule adresse, afin de rendre les explications plus claires.

La notion d'interface se confond alors avec les ports. De même, il n'est pas discuté de la seconde indication, relative au protocole de transport. Mais les explications doivent être généralisées pour s'appliquer également à une situation où le serveur UAS dispose de plusieurs adresses, ainsi que *mutatis mutandis*, au protocole de transport.

Dans l'ensemble de ces exemples des figures 3, 4 et 5, le client UAC transmet un message de signalisation M vers le port 5060 du serveur UAS. Son adresse IP est 192.168.0.1

Dans la situation représentée par la figure 3, l'entête « Via » peut être ainsi :
Via: SIP/2.0/UDP 192.168.0.1:5060; rpathPort=incoming ;

Le mot « incoming » est dans cet exemple le mot réservé spécifiant que le client UAC requiert que le serveur UAS lui renvoie le message de réponse R à partir du même port que celui sur lequel il a reçu le message M. Le serveur UAS détermine donc le port d'émission en utilisant ce mot réservé, et transmet donc le message de réponse R à partir du port 5060.

Un tel comportement peut être requis lorsqu'un équipement de traduction d'adresses de type NAT (« *Network Address Translator* ») ou un équipement de sécurité de type « Firewall » est placé entre le serveur UAS et le client UAC. Ces équipements, en effet, ne permettent la transmission de trafic que si celui-ci correspond à une transaction déterminée. Une fois une transaction acceptée, le trafic correspondant pourra traverser l'équipement, mais tout autre message est refusé. Il importe donc que le message de signalisation de réponse R soit considéré par l'équipement de sécurité ou de traduction d'adresses comme appartenant à la même transaction que le message de signalisation M. Il est donc essentiel qu'il emprunte le même chemin : mêmes adresses, mêmes ports..

Le mot réservé « incoming » permet donc de s'assurer que le message de réponse empruntera effectivement le même chemin et qu'il pourra donc traverser ces types d'équipements.

Dans la situation représentée par la figure 4, l'entête « Via » peut être ainsi :
Via: SIP/2.0/UDP 192.168.0.1:5060; rpathPort=any

Ce mot réservé « any » spécifie que le client UAC demande à ce que le serveur UAS détermine le port d'émission de la réponse R de façon aléatoire. Dans l'exemple, le serveur UAS choisit aléatoirement le port 4567 pour émettre le message de réponse R vers le port 5060 du client UAC.

Cela peut permettre au client UAC de se prémunir de l'utilisation par le serveur d'un chemin réservé tel que celui qui est sécurisé pour IPSEC.

On peut encore imaginer d'autres modèles de comportement d'un serveur pouvant être demandé par un client. On peut par exemple imaginer que le client puisse demander à ce que le port utilisé par le serveur soit différent du port de réception.

Il est également possible qu'un mot réservé indique un critère sémantique de détermination du port à utiliser. Ce critère sémantique peut par exemple être un mécanisme requérant un port particulier.

Un tel mécanisme peut être IPsec (« *Internet Protocol Security* ») tel que défini par le RFC 2401. Cet exemple est illustré par la figure 5. Un entête « Via » possible est :
Via: SIP/2.0/UDP 192.168.0.1:5060; rpathPort=ipsec;

Le mot réservé peut être « IPSEC » et le serveur UAS recevant un message M comportant un tel mot réservé détermine quel port est associé à ce mécanisme IP Sec et émet le message de réponse R à partir de ce port, ainsi qu'il est requis par les spécifications du protocole IPSEC.

Cet exemple de mise en oeuvre de l'invention permet de résoudre un problème technique, mal résolu jusqu'à présent. En effet, l'état de la technique consistait à mettre en oeuvre des moyens logiciels supplémentaires au sein des serveurs UAS (donc potentiellement au sein de tout équipement mettant en oeuvre le protocole SIP), afin d'analyser les messages de signalisation entrants et de déterminer s'il requiert le mécanisme IPSEC. Si c'est le cas, alors le serveur UAS utilise le port associé à IPSEC.

Cette solution requiert donc l'ajout de moyens logiciels qui alourdissent le traitement des messages de signalisation SIP.

L'invention permet ici de se passer de ces moyens logiciels et de ne pas nécessiter que les équipements aient la connaissance du mécanisme IPSEC.

Il est également possible de définir d'autres mots réservés correspondant à d'autres critères sémantiques. Par exemple, certains mots réservés peuvent correspondre à des types de trafic (comme « VoIP », « Instant Messaging »...) permettant ainsi de trier les flux de données. Une telle mise en oeuvre peut permettre de faire aisément un contrôle ou des statistiques sur les flux de données en s'intéressant uniquement aux ports. On peut par exemple interrompre un flux qui deviendrait problématique, en fermant le port correspondant.

De façon similaire, une seconde indication permet de préciser le protocole de transport qui doit être utilisé par le serveur de communication.

Le client de communication peut donc être adapté pour insérer dans le message de signalisation cette seconde indication sur le protocole à utiliser par le serveur pour émettre son message de signalisation de réponse. Le serveur de communication peut de même être adapté pour déterminer le protocole à utiliser pour émettre le message de signalisation de réponse, en fonction de cette seconde indication contenue dans le message de signalisation entrant.

Cette seconde indication peut être introduite par un mot-clé, par exemple « rpathTransport », et peut consister en un identifiant de protocole (TCP, UDP, etc.) ou bien en un mot réservé spécifiant un comportant à respecter par le serveur.

Ces mots réservés peuvent être similaires à ceux utilisés pour la première indication.

Un autre mot réservé (par exemple, « nochange ») peut indiquer que le message de réponse sera transporté par le même protocole que celui utilisé pour le message de signalisation initial. Notamment, dans le cas où celui-ci est le protocole UDP, le mot réservé « nochange » indique que le protocole de transport UDP sera utilisé pour le message de réponse, même si la longueur de ce message de réponse dépasse le seuil (typiquement 1300 octets) au-delà duquel la transmission d'un message SIP commute normalement en TCP.

L'utilisation de la seconde indication permet donc de contourner un mécanisme par défaut et d'imposer un comportement spécifique.

L'invention permet aussi de résoudre de façon intéressant le problème de la traversée des équipements de traduction d'adresses NAT et/ou de sécurité de type « Firewall ».

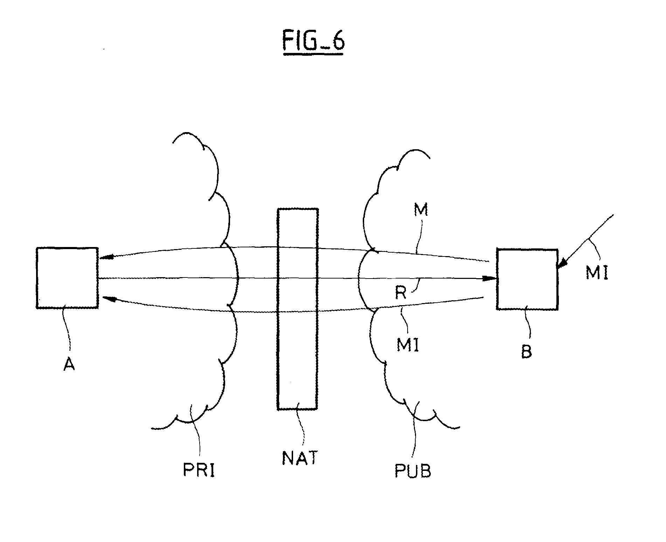

La figure 6 illustre une mise en oeuvre de l'invention à ces fins.

Un équipement de traduction d'adresses NAT délimite un espace ou réseau privé, PRI, et un espace public PUB.

Les équipements, A, situés dans le réseau privé PRI ne disposent pas d'adresses publiques en propre. Afin de communiquer avec le réseau public (ou avec d'autres réseaux privés, mais par l'intermédiaire du réseau public), ils doivent transmettre leurs messages à travers un équipement de traduction d'adresses NAT. Celui-ci leur attribue alors dynamiquement une adresse publique et effectue les modifications nécessaires dans les messages sortants afin que les adresses privées soient remplacées par des adresses publiques, attribuées dynamiquement.

L'équipement NAT mémorise une association entre une adresse privée et une adresse publique, afin de pouvoir acheminer les messages provenant du réseau public. En effet, ces messages ne comporte que l'adresse publique de l'équipement A puisque l'adresse privée n'est pas connue et n'a pas de sens en dehors du réseau privé PRI. Par contre, cette adresse publique, attribuée dynamiquement par l'équipement NAT, ne permet pas d'acheminer le message dans le réseau privé PRI. L'équipement NAT utilise les associations mémorisées pour effectuer une traduction d'adresses à rebours et remplacer les adresses publiques par des adresses privées.

Toutefois, ces associations ont une valeur temporaire.

Dans le cadre du protocole TCP (« *Transport Control* Protocol »), l'association sera supprimée par l'équipement NAT, lorsqu'un certain délai s'est écoulé après le dernier message de la connexion TCP.

En outre, il peut être nuisible de maintenir artificiellement une connexion TCP ouverte en transmettant des messages dans le seul but de rafraichir le délai d'expiration. En effet, une connexion TCP nécessite des ressources dans chacune des parties, et il se pose des problèmes de déploiement dès lors qu'un équipement a à gérer un grand nombre de connexions TCP.

Généralement, les équipements de traduction d'adresses NAT implémentent également une fonction de sécurité de type « Firewall » qui interdit les connexions TCP provenant d'un équipement B situé dans l'espace public PUB. Celui-ci peut transmettre des messages transportés par le protocole TCP à un équipement A situé dans l'espace privé PRI, mais uniquement dans le cadre d'une connexion TCP existante et créé à l'initiative de l'équipement A.

Le protocole SIP peut être transporté par différents protocoles, comme nous l'avons précédemment évoqué, mais le protocole TCP présente différents avantages qui le rende indispensable pour certaines applications et pour certaines situations.

Un problème se pose donc lorsque l'équipement B souhaite transmettre un message de signalisation SIP transporté par le protocole TCP à l'équipement A, sans qu'une connexion TCP préexiste.

C'est par exemple le cas lorsque l'équipement B est un élément intermédiaire de signalisation de type « SIP proxy ». Par exemple, cela peut être un élément P-CSCF (« proxy - Call Session Control Function »).

Celui-ci reçoit un message d'invitation MI destiné à l'équipement A. Ce message d'invitation est typiquement un message SIP « Invite » dont le but est d'inviter l'équipement à accepter une session de communication avec l'émetteur du message d'invitation (non représenté sur la figure). On suppose que ce message d'invitation TCP est transporté par le protocole TCP et doit être transmis jusqu'à la partie appelée A en utilisant ce protocole TCP.

L'équipement B transmet alors un message de signalisation M destiné à l'équipement A.

Afin de traverser l'équipement de traduction d'adresses NAT, il transmet ce message M sur le protocole UDP (« User *Datagram Protocol* ») qui ne nécessite pas de connexion.

Dans ce message, il insère une indication spécifiant que l'équipement A doit transmettre une réponse utilisant le protocole TCP comme protocole de transport. Selon une mise en oeuvre de l'invention, il insère au sein de l'entête « Via » un paramètre « rpathTransport=TCP ».

L'équipement B, agissant en tant que serveur UAS, transmet un message de réponse R à l'équipement A, agissant en tant que client UAC.

Ce message de réponse R crée une connexion TCP entre les deux équipements.

A la réception du message de réponse R, l'équipement B transmet alors le message d'invitation MI, préalablement reçu.

Ce message d'invitation MI peut être transmis en utilisant le protocole TCP, puisque la connexion a déjà été ouverte par le message de réponse R.

L'invention permet donc de requérir une réponse utilisant un protocole de transport différent du protocole utilisé pour le message original ; ce que ne permettait pas l'entête « Via » puisque celui précise à la fois le protocole du message original et le protocole demandé pour la réponse.

L'invention permet donc également de résoudre le problème de la transmission d'un message d'invitation SIP utilisant TCP vers un équipement situé derrière un NAT.

## Revendications

1. Client de communication (C), comportant au moins une interface d'émission pour émettre un message de signalisation (M), conforme au protocole SIP, vers une première interface d'un serveur de communication (S), ledit client et ledit serveur étant connectés par un réseau de communication (N₁), **caractérisé en ce qu'**il est adapté pour insérer dans ledit message de signalisation une indication sur l'interface à utiliser par ledit serveur de communication pour émettre son message de signalisation de réponse (R).

2. Client de communication selon la revendication précédente, dans lequel ladite indication contient une adresse à utiliser par ledit serveur de communication pour émettre son message de signalisation de réponse.

3. Client de communication selon la revendication 1, dans lequel ladite indication contient un mot réservé spécifiant un comportement à respecter par ledit serveur de communication pour choisir l'adresse à utiliser pour émettre son message de signalisation de réponse.

4. Client de communication selon la revendication précédente, dans lequel ledit mot réservé est choisi dans un groupe comprenant au moins :
- un mot réservé spécifiant que ladite adresse à utiliser est la même que celle de ladite première interface ;
- un mot réservé spécifiant que ladite adresse à utiliser doit être déterminé de façon aléatoire ;
- un mot réservé indiquant un critère sémantique de détermination de ladite adresse à utiliser.

5. Client de communication selon l'une des revendications précédentes, dans lequel ladite indication contient un numéro de port à utiliser par ledit serveur de communication pour émettre son message de signalisation de réponse.

6. Client de communication selon la revendication 5, dans lequel ladite indication contient un mot réservé spécifiant un comportement à respecter par ledit serveur de communication pour choisir le numéro de port à utiliser pour émettre son message de signalisation de réponse.

7. Client de communication selon la revendication précédente, dans lequel ledit mot réservé est choisi dans un groupe comprenant au moins :
- un mot réservé spécifiant que ledit numéro de port à utiliser est le même que celui de ladite première interface ;
- un mot réservé spécifiant que ledit numéro de port à utiliser doit être déterminé de façon aléatoire ;
- un mot réservé indiquant un critère sémantique de détermination de dudit numéro de port à utiliser.

8. Client de communication selon l'une des revendications précédentes, adapté pour insérer une seconde indication sur le protocole à utiliser par ledit serveur pour émettre son message de signalisation de réponse.

9. Client de communication selon l'une des revendications précédentes, dans lequel ladite indication est insérée au sein d'un entête « Via ».

10. Serveur de communication (S) comportant au moins une interface pour recevoir un message de signalisation entrant (M) d'un réseau de communication (N₁), et une seconde interface pour émettre un message de signalisation de réponse, **caractérisé en ce qu'**il est en outre adapté pour déterminer ladite seconde interface en fonction d'une indication contenue dans ledit message de signalisation entrant (M).

11. Serveur de communication selon la revendication précédente, dans lequel ladite indication contient une adresse correspondant à ladite seconde interface.

12. Serveur de communication selon la revendication 10, dans lequel ladite indication contient un mot réservé spécifiant un comportement à respecter pour choisir l'adresse correspondant à ladite seconde interface.

13. Serveur de communication selon la revendication précédente, dans lequel ledit mot réservé est choisi dans un groupe comprenant au moins :
- un mot réservé spécifiant que ladite adresse est la même que celle de ladite première interface ;
- un mot réservé spécifiant que ladite adresse doit être déterminée de façon aléatoire ;
- un mot réservé indiquant un critère sémantique de détermination de ladite adresse.

14. Serveur de communication selon l'une des revendications 10 à 13, dans lequel ladite indication contient un numéro de port correspondant à ladite seconde interface.

15. Serveur de communication selon la revendication 14, dans lequel ladite indication contient un mot réservé spécifiant un comportement à respecter pour choisir le numéro de port correspondant à ladite seconde interface.

16. Serveur de communication selon la revendication précédente, dans lequel ledit mot réservé est choisi dans un groupe comprenant au moins :
- un mot réservé spécifiant que ledit numéro de port est le même que celui de ladite première interface ;
- un mot réservé spécifiant que ledit numéro de port doit être déterminé de façon aléatoire ;
- un mot réservé indiquant un critère sémantique de détermination de dudit numéro de port.

17. Serveur de communication selon l'une des revendications 10 à 16, adapté pour déterminer le protocole à utiliser pour émettre ledit message de signalisation de réponse, en fonction d'une seconde indication contenue dans ledit message de signalisation entrant (M).

18. Serveur de communication selon l'une des revendications 10 à 17, dans lequel ladite indication est insérée au sein d'un entête « Via ».

19. Procédé pour la communication de messages de signalisation entre un client et un serveur connectés par un réseau de communication, comportant une première étape de transmission d'un message de signalisation par ledit client destiné audit serveur, et une seconde étape de transmission par ledit serveur d'un message de réponse destiné audit client, à partir d'une interface, **caractérisé en ce que** ledit client insère une indication au sein dudit message de signalisation préalablement à ladite première étape, et **en ce que** ledit serveur détermine ladite interface en fonction de ladite indication, préalablement à ladite seconde étape.

20. Terminal de communication adapté pour mettre en oeuvre un client de communication selon l'une des revendications 1 à 9 et/ou un serveur de communication selon l'une des revendications 10 à 18.

21. Réseau de communication comportant au moins un terminal selon la revendication précédente.

22. Réseau de communication selon la revendication précédente, dans lequel ledit serveur de communication et/ou ledit client de communication est un élément mettant en oeuvre une fonction CSCF conformément aux spécifications d'une architecture IMS.

23. Equipement de communication (B) adapté pour à la réception d'un message de signalisation entrant (MI) transporté par le protocole TCP et destiné à un second équipement de communication (A) situé derrière un équipement de traduction d'adresses (NAT), transmettre audit second équipement un message de signalisation (M) utilisant le protocole UDP et contenant une indication sur l'interface à utiliser par ledit second équipement (A) pour émettre une réponse (R) audit équipement de communication, et transmettre ledit message de signalisation entrant (MI) après la réception dudit message de réponse (R), ladite indication spécifiant que ladite réponse doit utiliser le protocole TCP.

24. Système de communication contenant un équipement de communication selon la revendication précédente, et dans lequel ledit second équipement est un serveur selon l'une des revendications 17 ou 18.

25. Système de communication selon la revendication précédente, dans lequel ladite indication est insérée au sein d'un entête « Via ».
